# EUROPEAN PATENT APPLICATION

(11) **EP 4 585 729 A1**
(43) Date of publication of application: **16.07.2025**
(21) Application number: 23862386.2
(22) Date of filing: 05.09.2023
(51) Int. Cl.: D01F 11/14, D01F 9/22, D06M 15/643

(54) **OILING AGENT FOR POLYACRYLONITRILE CARBON FIBER PRECURSOR WITH LOW FRICTION COEFFICIENT AND PREPARATION METHOD THEREFOR**

(30) Priority: 08.09.2022 CN 202211096121
(71) Applicant: Zhongfu Shenying Carbon Fiber Co., Ltd., Jiangsu 222069 (CN)
(72) Inventor: CHEN, Qiufei, Lianyungang, Jiangsu 222069 (CN); ZHU, Weiwei, Lianyungang, Jiangsu 222069 (CN); LIU, Lei, Lianyungang, Jiangsu 222069 (CN); TAO, Zhenzhen, Lianyungang, Jiangsu 222069 (CN); WANG, Fen, Lianyungang, Jiangsu 222069 (CN)
(74) Representative: Michalski Hüttermann & Partner Patentanwälte mbB
(86) International application number: PCT/CN2023/117023
(87) International publication number: WO 2024/051692

(57) **Abstract**

The present application discloses an oiling agent for low friction coefficient polyacrylonitrile carbon fiber precursor and a preparation method therefor. In parts by weight, the oiling agent is composed of 20-30 parts of a modified silicone oil, 10-15 parts of a surfactant, 1-3 parts of a lubricant, 2-5 parts of an antistatic agent, and 100-150 parts of deionized water. The oiling agent of the present application has excellent lubricity, demoulding and antistatic properties, the F/F friction coefficient of the obtained carbon fiber precursor is below 0.16, which solves the problems of roller sticking during drying and poor fiber broken filaments of a traditional oiling agent, reduces the generation of surface defects in the fiber production process, and improves the mechanical properties of the fiber.

## Description

The present application claims priority to Chinese patent application filed with the Chinese Intellectual Property Office on September 8, 2022, with application number 202211096121.1 and titled "OILING AGENT FOR LOW FRICTION COEFFICIENT POLYACRYLONITRILE CARBON FIBER PRECURSOR AND PREPARATION METHOD THEREFOR", the entire contents of which are incorporated herein by reference.

### Technical Field

The present application relates to the technical field of high-performance carbon fiber preparation, and in particular to an oiling agent for low friction coefficient polyacrylonitrile carbon fiber precursor and preparation method therefor.

### Background

Oiling agent is a key auxiliary agent used in the production of polyacrylonitrile carbon fiber precursor. The main function of the oiling agent is to adjust the friction of the precursor surface, prevent or eliminate static electricity accumulation, and endow the precursor with characteristics such as smoothness, softness, and cohesion. The high-performance oiling agent is beneficial to the drying, densification, drawing and heat setting of the polyacrylonitrile primary fiber, minimizes the micro defects of the precursor fiber, and ensures that the precursor fiber can be pre-oxidized and carbonized. The modified oiling agent based on polydimethylsiloxane has the advantages of good heat resistance, low surface tension and self-lubrication, and is widely used in practical production. However, chemical cross-linking reactions often occur between the components of silicone oiling agent during the drying and densification process, resulting in increased friction between the fiber surface and the roller surface, causing roller sticking problems. For example, Chinese patents CN103031734B and CN105297427B both use a variety of modified silicone oiling agents in combination. The phenomenon of cross-linking and roller sticking of amino and epoxy silicone oil commonly occurs during the long-term operation of the production line, which damages the carbon fiber surface, produces broken filaments or filament breakage, and ultimately leads to a decrease in the mechanical properties of the fibers.

### Summary

The present application aims to provide an oiling agent for low friction coefficient polyacrylonitrile carbon fiber precursor and preparation method therefor.

The present application is implemented through the following technical solutions:
According to a first aspect of the present application, an oiling agent for low friction coefficient polyacrylonitrile carbon fiber precursor is provided. In parts by weight, the oiling agent is a stable emulsion with a particle size distribution of 200 to 600 nm, obtained by a phase inversion emulsification method from 20 to 30 parts of modified silicone oil, 10 to 15 parts of surfactant, 1 to 3 parts of lubricant, 2 to 5 parts of antistatic agent, and 100 to 150 parts of deionized water, wherein the lubricant is selected from oleic acid amide or erucamide, and the antistatic agent is selected from fatty amine polyoxyethylene ether, polyoxyethylene laurate, or castor oil polyoxyethylene ether.

The modified silicone oil in the present application is modified silicone oil conventionally used in the oiling agents for polyacrylonitrile carbon fiber precursors. preferably, the modified silicone oil in the present application is selected from one or more of amino-modified silicone oils and epoxy-modified silicone oils, more preferably, is a mixture of amino-modified silicone oils and epoxy-modified silicone oils.

Preferably, the ammonia value of the amino-modified silicone oil is 0.20 to 0.50 mmol/g.

Preferably, the epoxy value of the epoxy-modified silicone oil is 0.10 to 0.40 mmol/g.

The surfactant in the present application is a surfactant conventionally used in the oiling agents for polyacrylonitrile carbon fiber precursors. Preferably, the surfactant in the present application is selected from one or more of iso-tridecanol polyoxyethylene ether, fatty alcohol polyoxyethylene ether, propylene glycol methyl ether, ethylene glycol butyl ether, and dimethylformamide; more preferably, is selected from two of iso-tridecanol polyoxyethylene ether, fatty alcohol polyoxyethylene ether, propylene glycol methyl ether, ethylene glycol butyl ether, and dimethylformamide.

It is found in the experiments that by controlling the above components within the above ranges and using the modified silicone oil, lubricant, surfactant and antistatic agent selected in the present application in combination, can well take into account the bundling, heat resistance and other properties of the oiling agent, and ensure that the fiber prepared therefrom has a suitable friction coefficient, avoiding problems such as roller sticking and large broken filaments; and at the same time, the fiber has excellent broken filaments grade and mechanical properties.

According to a second aspect of the present application, a preparation method for the oiling agent for low friction coefficient polyacrylonitrile carbon fiber precursor is provided, and comprising the following steps:
(1) Adding the lubricant to the surfactant and the antistatic agent according to the proportion, heating to 80-100° C, stirring to dissolve, and mixing evenly to obtain a mixed material, and cooling the mixed material to room temperature for use;
(2) slowly adding the mixed material to the modified silicone oil, stirring and mixing evenly to obtain a mixture;
(3) slowly adding water to the mixture for phase inversion emulsification, with a shear stirring rate of 800 to 2000 rpm, to obtain a stable emulsion with a particle size distribution of 200 to 600 nm, that is, the oiling agent for low friction coefficient polyacrylonitrile carbon fiber precursor.

Compared with the prior art, the present application has the following advantages:
(1) The lubricant introduced in the present application reduces the friction resistance between the fiber and the roller, and improves the demoulding ability between the oil film on the fiber surface and the roller.
(2) The antistatic agent introduced in the present application not only has its own antistatic effect, but also has good wettability, which reduces the surface tension of the emulsion and improves the uniformity of oiling on the precursor. It also has a bundling effect, which reduces electrostatic repulsion its own, bunches the fibers and reduces fiber broken filaments.
(3) The oiling agent for polyacrylonitrile carbon fiber precursor of the present application has excellent lubricity, demoulding and antistatic properties. The F/F friction coefficient of the obtained carbon fiber precursor is below 0.16, which solves the problems of roller sticking during drying and poor fiber broken filaments of a traditional oiling agent, reduces the generation of surface defects in the fiber production process, and significantly improves the mechanical properties of the fiber.

### Detailed Description

The technical solution of the present application will be clearly and completely described below in conjunction with the embodiments of the present application. Obviously, the described embodiments are only part of the embodiments of the present application, rather than all of the embodiments. Based on the embodiments in the present application, all other embodiments obtained by those of ordinary skill in the art without making any creative work shall fall within the scope of protection of the present application. It should be noted that, unless there is a conflict, the embodiments and features in the present application can be combined with each other arbitrarily.

The raw materials and reagents used in the following examples and comparative examples can be purchased commercially.

### Example 1

10 parts by mass of amino-modified silicone oil, with an ammonia value of 0.20 mmol/g; 10 parts by mass of epoxy-modified silicone oil, with an epoxy value of 0.10 mmol/g; surfactant: 6 parts by mass of iso-tridecanol polyoxyethylene ether, and 4 parts by mass of ethylene glycol butyl ether; lubricant: 1 part by mass of oleamide; antistatic agent: 2 parts by mass of fatty amine polyoxyethylene ether; and 100 parts by mass of deionized water.

The lubricant is added to the surfactant and the antistatic agent, heated to 80°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 1500 rpm, to obtain an oil emulsion that is stable at room temperature. The evaluation results of the prepared oiling agent on the production line are shown in Table 1. The oil content of the carbon fiber precursor is 0.74%, the F/F friction coefficient is 0.153, the broken filament grade of the fiber precursor is 1.5 (divided into 1-5 grades, 1 is the best, and 5 is the worst), and there is no roller sticking phenomenon during drying of the fiber precursor; the carbon fiber tensile strength is 5137MPa, and the broken filament grade of the carbon fiber is 2 (divided into 1-5 grades, 1 is the best, and 5 is the worst).

### Example 2

15 parts by mass of amino-modified silicone oil, with an ammonia value of 0.20 mmol/g; 10 parts by mass of epoxy-modified silicone oil, with an epoxy value of 0.10 mmol/g; surfactant: 6 parts by mass of iso-tridecanol polyoxyethylene ether, and 4 parts by mass of ethylene glycol butyl ether; lubricant: 2 parts by mass of oleamide; antistatic agent: 3 parts by mass of fatty amine polyoxyethylene ether; and 100 parts by mass of deionized water.

The lubricant is added to the surfactant and the antistatic agent, heated to 90°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 800 rpm, to obtain an oil emulsion that is stable at room temperature. The evaluation results of the prepared oiling agent on the production line are shown in Table 1.

### Example 3

15 parts by mass of amino-modified silicone oil, with an ammonia value of 0.50 mmol/g; 10 parts by mass of epoxy-modified silicone oil, with an epoxy value of 0.40 mmol/g; surfactant: 10 parts by mass of iso-tridecanol polyoxyethylene ether, and 5 parts by mass of propylene glycol methyl ether; lubricant: 2 parts by mass of erucamide; antistatic agent: 3 parts by mass of polyoxyethylene laurate; and 100 parts by mass of deionized water.

The lubricant is added to the surfactant and the antistatic agent, heated to 100°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 2000 rpm, to obtain an oil emulsion that is stable at room temperature. The evaluation results of the prepared oiling agent on the production line are shown in Table 1.

### Example 4

15 parts by mass of amino-modified silicone oil, with an ammonia value of 0.50 mmol/g; 10 parts by mass of epoxy-modified silicone oil, with an epoxy value of 0.40 mmol/g; surfactant: 6 parts by mass of fatty alcohol polyoxyethylene ether, and 4 parts by mass of propylene glycol methyl ether; lubricant: 2 parts by mass of erucamide; antistatic agent: 4 parts by mass of castor oil polyoxyethylene ether; and 150 parts by mass of deionized water.

The lubricant is added to the surfactant and the antistatic agent, heated to 100°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 1500 rpm, to obtain an oil emulsion that is stable at room temperature. The evaluation results of the prepared oiling agent on the production line are shown in Table 1.

### Example 5

15 parts by mass of amino-modified silicone oil, with an ammonia value of 0.40 mmol/g; 15 parts by mass of epoxy-modified silicone oil, with an epoxy value of 0.20 mmol/g; surfactant: 10 parts by mass of fatty alcohol polyoxyethylene ether, and 5 parts by mass of dimethylformamide; lubricant: 3 parts by mass of erucamide; antistatic agent: 5 parts by mass of polyoxyethylene laurate; and 150 parts by mass of deionized water.

The lubricant is added to the surfactant and the antistatic agent, heated to 100°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 1500 rpm, to obtain an oil emulsion that is stable at room temperature. The evaluation results of the prepared oiling agent on the production line are shown in Table 1.

### Example 6

25 parts by mass of amino-modified silicone oil, with an ammonia value of 0.20 mmol/g; surfactant: 10 parts by mass of iso-tridecanol polyoxyethylene ether; lubricant: 2 parts by mass of oleamide; antistatic agent: 3 parts by mass of fatty amine polyoxyethylene ether; and 100 parts by mass of deionized water.

The lubricant is added to the surfactant and the antistatic agent, heated to 90°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 800 rpm, to obtain an oil emulsion that is stable at room temperature. The evaluation results of the prepared oiling agent on the production line are shown in Table 1.

### Example 7

20 parts by mass of epoxy-modified silicone oil, with an epoxy value of 0.30 mmol/g; surfactant: 13 parts by mass of fatty alcohol polyoxyethylene ether; lubricant: 2 parts by mass of erucamide; antistatic agent: 3 parts by mass of fatty amine polyoxyethylene ether; and 100 parts by mass of deionized water.

The lubricant is added to the surfactant and the antistatic agent, heated to 95°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 800 rpm, to obtain an oil emulsion that is stable at room temperature. The evaluation results of the prepared oiling agent on the production line are shown in Table 1.

### Comparative Example 1

10 parts by mass of amino-modified silicone oil, with an ammonia value of 0.20 mmol/g; 10 parts by mass of epoxy-modified silicone oil, with an epoxy value of 0.10 mmol/g; surfactant: 6 parts by mass of iso-tridecanol polyoxyethylene ether, and 4 parts by mass of ethylene glycol butyl ether; antistatic agent: 2 parts by mass of fatty amine polyoxyethylene ether; and 100 parts by mass of deionized water.

The surfactant and the antistatic agent are stirred and mixed evenly to obtain the mixed material, and the mixed material is cooled to room temperature for later use. The mixed material is then slowly added into the amino-modified silicone oil and the epoxy-modified silicone oil, and stirred and mixed evenly to obtain a mixture. Finally, the water is slowly added to the mixture for phase inversion emulsification, with a shear stirring rate of 1500 rpm, to obtain an oil emulsion. The evaluation results of the prepared oiling agent on the production line are shown in Table 1. Compared with Example 1, without addition of the lubricant , the F/F friction coefficient of the fiber is significantly increased, the demoulding property of the precursor becomes worse, and there are problems of roller sticking and large broken filaments, and the strength of the carbon fiber decreases.

### Comparative Example 2

10 parts by mass of amino-modified silicone oil, with an ammonia value of 0.20 mmol/g; 10 parts by mass of epoxy-modified silicone oil, with an epoxy value of 0.10 mmol/g; surfactant: 6 parts by mass of iso-tridecanol polyoxyethylene ether, and 4 parts by mass of ethylene glycol butyl ether; lubricant: 4 parts by mass of oleamide; antistatic agent: 2 parts by mass of fatty amine polyoxyethylene ether; and 100 parts by mass of deionized water.

The lubricant is added to the surfactant and the antistatic agent, heated to 80°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 1500 rpm, to obtain an oil emulsion. The evaluation results of the prepared oiling agent on the production line are shown in Table 1. Compared with Example 1, due to the addition of excessive lubricant, the F/F friction coefficient of the fiber is significantly reduced, and the carbon fiber precursor has a problem of winding edge forming (conical shape), making it difficult to roll into a large shaft, and the edge of the carbon fiber precursor is easily collapsed when unwinding.

### Comparative Example 3

15 parts by mass of amino-modified silicone oil, with an ammonia value of 0.20 mmol/g; 10 parts by mass of epoxy-modified silicone oil, with an epoxy value of 0.10 mmol/g; surfactant: 6 parts by mass of iso-tridecanol polyoxyethylene ether, and 4 parts by mass of ethylene glycol butyl ether; lubricant: 2 parts by mass of oleamide; and 100 parts by mass of deionized water.

The lubricant is added to the surfactant, heated to 90°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 800 rpm, to obtain an oil emulsion. The evaluation results of the prepared oiling agent on the production line are shown in Table 1. Compared with Example 2, without addition of the antistatic agent, the antistatic and bundling properties of the oiling agent are decreased, the friction coefficient of the fiber is increased, the broken filament grade becomes worse, and the strength of the carbon fiber decreases.

### Comparative Example 4

15 parts by mass of amino-modified silicone oil, with an ammonia value of 0.20 mmol/g; 10 parts by mass of epoxy-modified silicone oil, with an epoxy value of 0.10 mmol/g; surfactant: 6 parts by mass of iso-tridecanol polyoxyethylene ether, and 4 parts by mass of ethylene glycol butyl ether; lubricant: 2 parts by mass of oleamide; antistatic agent: 6 parts by mass of fatty amine polyoxyethylene ether; and 100 parts by mass of deionized water.

The lubricant is added to the surfactant and the antistatic agent, heated to 90°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 800 rpm, to obtain an oil emulsion. The evaluation results of the prepared oiling agent on the production line are shown in Table 1. Compared with Example 2, due to the addition of excessive antistatic agent, the broken filament grade and friction coefficient of the fiber do not significantly change, but the strength of the fiber decreases, and the broken filament grade becomes worse. This may be due to the excessive antistatic agent, which leads to the decrease of the heat resistance of the oil agent, the decrease of the protective effect on the fiber surface during the pre-oxidation and carbonization process, and the increase of carbon fiber defects.

### Comparative Example 5

30 parts by mass of amino-modified silicone oil, with an ammonia value of 0.50 mmol/g; 10 parts by mass of epoxy-modified silicone oil, with an epoxy value of 0.40 mmol/g; surfactant: 6 parts by mass of fatty alcohol polyoxyethylene ether, and 4 parts by mass of propylene glycol methyl ether; lubricant: 2 parts by mass of erucamide; antistatic agent: 4 parts by mass of castor oil polyoxyethylene ether; and 150 parts by mass of deionized water.

The lubricant is added to the surfactant and the antistatic agent, heated to 100°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 1500 rpm, to obtain an oil emulsion. The evaluation results of the prepared oiling agent on the production line are shown in Table 1. Compared with Example 4, the addition of excessive modified silicone oil leads to the increase of the particle size of the emulsion, the uneven spread of the oil on the surface of the fiber, the increase of the friction resistance, the defects on the surface of the precursor, and the decrease of the strength of the carbon fiber and broken filament grade.

### Comparative Example 6

10 parts by mass of amino-modified silicone oil, with an ammonia value of 0.20 mmol/g; 10 parts by mass of epoxy-modified silicone oil, with an epoxy value of 0.10 mmol/g; surfactant: 6 parts by mass of iso-tridecanol polyoxyethylene ether, and 4 parts by mass of ethylene glycol butyl ether; lubricant: 1 part by mass of stearic acid; antistatic agent: 2 parts by mass of fatty amine polyoxyethylene ether; and 100 parts by mass of deionized water.

The lubricant is added to the surfactant and the antistatic agent, heated to 80°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 1500 rpm, to obtain an oil emulsion. The evaluation results of the prepared oiling agent on the production line are shown in Table 1. Compared with Example 1, due to the use of stearic acid as the lubricant, the F/F friction coefficient of the fiber is significantly increased, and the production of the precursor has serious problems of roller sticking and large broken filaments, and the mechanical properties of the carbon fiber are decreased.

### Comparative Example 7

10 parts by mass of amino-modified silicone oil, with an ammonia value of 0.20 mmol/g; 10 parts by mass of epoxy-modified silicone oil, with an epoxy value of 0.10 mmol/g; surfactant: 6 parts by mass of iso-tridecanol polyoxyethylene ether, and 4 parts by mass of ethylene glycol butyl ether; lubricant: 1 part by mass of oleamide; antistatic agent: 2 parts by mass of octadecyl dimethyl hydroxyethyl quaternary ammonium nitrate (SN), and 100 parts by mass of deionized water.

The lubricant is added to the surfactant and the antistatic agent, heated to 80°C, stirred to dissolve, and mixed evenly to obtain the mixed material, and the mixed material is cooled to room temperature for later use. The mixed material is then slowly added to the amino-modified silicone oil and the epoxy-modified silicone oil, and stirred to mix evenly to obtain a mixture. Finally, the water is slowly added to the mixture for phase inversion emulsification, with a shear stirring rate of 1500 rpm, to obtain an oil emulsion. The evaluation results of the prepared oiling agent on the production line are shown in Table 1. Compared with Example 1, due to the use of the antistatic agent SN, the friction coefficient of the precursor is basically unchanged, and the broken filament grade of the precursor is deteriorated. The possible reason is that the change of the antistatic agent causes the wettability of the oiling agent of the carbon fiber to deteriorate, and the bundling of the fiber is weakened, which ultimately has an adverse effect on the strength of the carbon fiber and the broken filament of the carbon fiber.

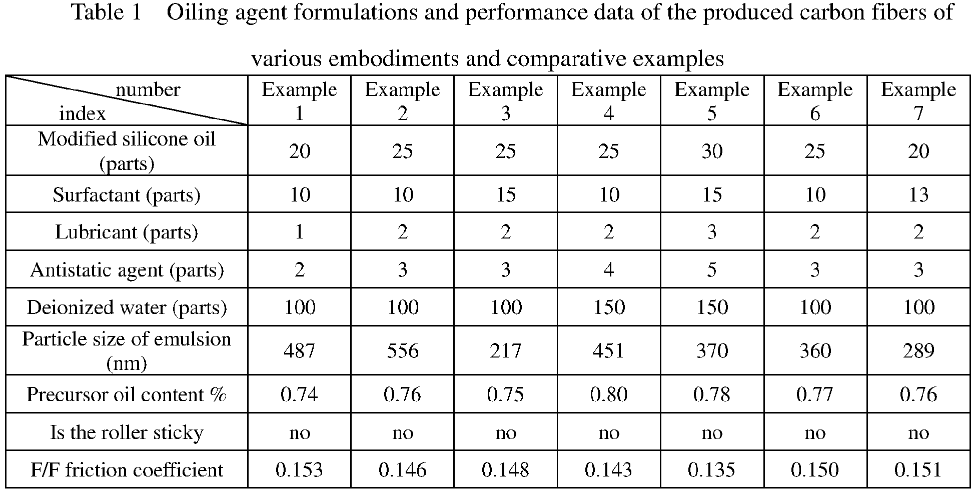

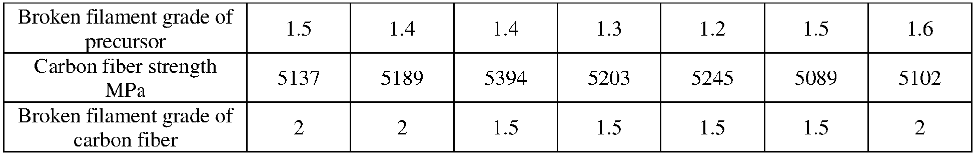

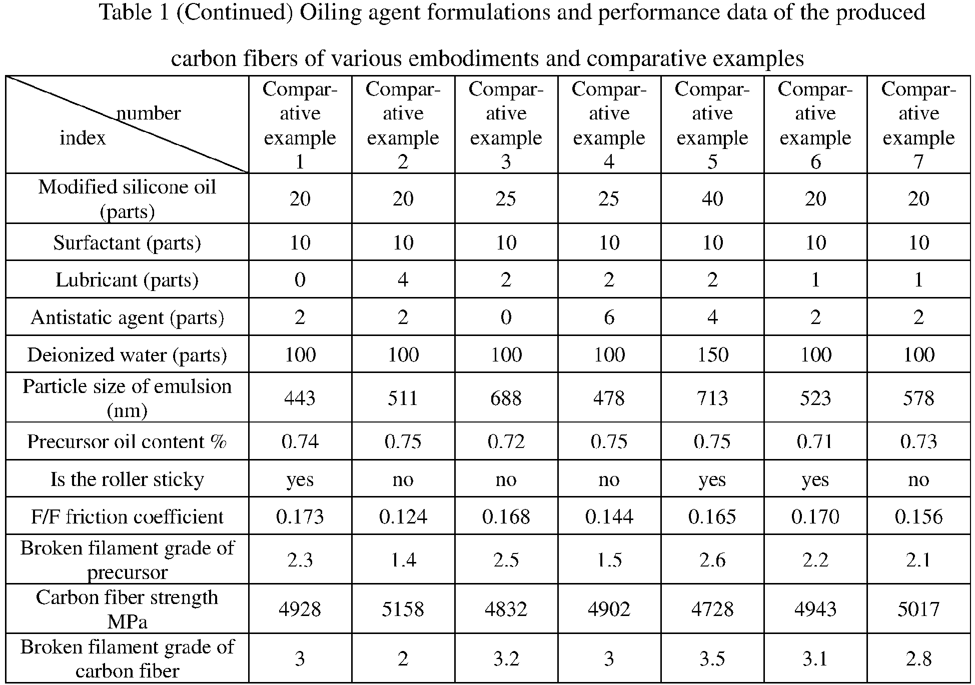

In summary, the lubricant introduced in the present application reduces the friction resistance between the fiber and the roller, and improves the demoulding ability between the oil film on the fiber surface and the roller. The introduced antistatic agent has good wettability and a bundling effect, which can reduce the surface tension of the oiling agent and reduce fiber breakage. The oiling agent of the present application has excellent lubricity, demoulding and antistatic properties. The F/F friction coefficient of the obtained carbon fiber precursor is below 0.16, which solves the problems of roller sticking during drying and poor fiber broken filaments of a traditional oiling agent, reduces the generation of surface defects in the fiber production process, and helps to improve the mechanical properties of the fiber.

Finally, it should be noted that in the present application, the terms "include", "comprise" or any other variations thereof are intended to cover non-exclusive inclusion, so that a process, method, article or apparatus that includes a series of elements includes not only those elements, but also other elements that are not explicitly listed, or also includes elements that are inherent to such process, method, article or apparatus. Without more constraints, an element defined by the phrase "comprising a ..." does not exclude the existence of other identical elements in the process, method, article or apparatus comprising the element.

The above embodiments are only used to illustrate the technical solution of the present application, but not to limit it. Although the present application has been described in detail with reference to the aforementioned embodiments, a person of ordinary skill in the art should understand that it is still possible to modify the technical solutions described in the aforementioned embodiments, or to make equivalent replacements for some of the technical features therein; and these modifications or replacements do not cause the essence of the corresponding technical solutions to deviate from the spirit and scope of the technical solutions of the embodiments of the present application.

### Industrial Applicability

In the oiling agent for low friction coefficient polyacrylonitrile carbon fiber precursor provided in the present application, the introduced lubricant can reduce the friction resistance between the fiber and the roller, and improve the demoulding ability between the oil film on the fiber surface and the roller. The introduced antistatic agent not only has its own antistatic effect, but also good wettability, which reduces the surface tension of the emulsion and improves the uniformity of oiling on the precursor. The introduced antistatic agent also has a bundling effect, which reduces electrostatic repulsion its own, bunches the fibers and reduces fiber broken filaments. The oiling agent has excellent lubricity, demoulding and antistatic properties. The F/F friction coefficient of the obtained carbon fiber precursor is below 0.16, which solves the problems of roller sticking during drying and poor fiber broken filaments of a traditional oiling agent, reduces the generation of surface defects in the fiber production process, and significantly improves the mechanical properties of the fiber.

## Claims

1. An oiling agent for low friction coefficient polyacrylonitrile carbon fiber precursor, **characterized in that**, in parts by weight, the oiling agent is a stable emulsion with a particle size distribution of 200 to 600 nm obtained by a phase inversion emulsification method from 20 to 30 parts of modified silicone oil, 10 to 15 parts of surfactant, 1 to 3 parts of lubricant, 2 to 5 parts of antistatic agent, and 100 to 150 parts of deionized water, wherein the lubricant is selected from oleamide or erucamide, and the antistatic agent is selected from fatty amine polyoxyethylene ether, polyoxyethylene laurate, or castor oil polyoxyethylene ether.

2. The oiling agent for low friction coefficient polyacrylonitrile carbon fiber precursor according to claim 1, wherein the modified silicone oil is selected from one or more of amino-modified silicone oil and epoxy-modified silicone oil.

3. The oiling agent for low friction coefficient polyacrylonitrile carbon fiber precursor according to claim 1, wherein the modified silicone oil is a mixture of amino-modified silicone oil and epoxy-modified silicone oil.

4. The oiling agent for low friction coefficient polyacrylonitrile carbon fiber precursor according to claim 2, wherein an ammonia value of the amino-modified silicone oil is 0.20 to 0.50 mmol/g.

5. The oiling agent for low friction coefficient polyacrylonitrile carbon fiber precursor according to claim 2, wherein an epoxy value of the epoxy-modified silicone oil is 0.10 to 0.40 mmol/g.

6. The oiling agent for low friction coefficient polyacrylonitrile carbon fiber precursor according to claim 1, wherein the surfactant is selected from one or more of iso-tridecanol polyoxyethylene ether, fatty alcohol polyoxyethylene ether, propylene glycol methyl ether, ethylene glycol butyl ether, and dimethylformamide.

7. The oiling agent for low friction coefficient polyacrylonitrile carbon fiber precursor according to claim 1, wherein the surfactant is selected from two of iso-tridecanol polyoxyethylene ether, fatty alcohol polyoxyethylene ether, propylene glycol methyl ether, ethylene glycol butyl ether, and dimethylformamide.

8. A preparation method for the oiling agent for low friction coefficient polyacrylonitrile carbon fiber precursor according to any one of claims 1 to 7, **characterized by** comprising:
(1) Adding the lubricant to the surfactant and the antistatic agent according to a proportion, heating to 80-100° C, stirring to dissolve, and mixing evenly to obtain a mixed material, and cooling the mixed material to room temperature for use;
(2) slowly adding the mixed material to the modified silicone oil, stirring and mixing evenly to obtain a mixture;
(3) slowly adding water to the mixture for phase inversion emulsification, with a shear stirring rate of 800 to 2000 rpm, to obtain a stable emulsion with a particle size distribution of 200 to 600 nm, that is, the oiling agent for low friction coefficient polyacrylonitrile carbon fiber precursor.
